(19) Europäisches Patentamt
European Patent Office
Office européen des brevets

(11) **EP 0 741 306 B1**

(12) **FASCICULE DE BREVET EUROPEEN**

(45) Date de publication et mention
de la délivrance du brevet:
**23.08.2000 Bulletin 2000/34**

(51) Int Cl.$^7$: **G01S 13/34**

(21) Numéro de dépôt: **96104452.6**

(22) Date de dépôt: **20.03.1996**

(54) **Procédé de mesure de la distance et de la vitesse relatives d'un objet par rapport à un radar à ondes continues modulées en fréquence de manière périodique**

Verfahren zur Messung des Abstandes und der relativen Geschwindigkeit eines Objektes im Bezug auf ein periodischerweise frequenzmoduliertes Dauerstrichradar

Method for measuring the range and the relative speed of a body with reference to a periodically frequency modulated continuous wave radar

(84) Etats contractants désignés:
**DE FR GB IT SE**

(30) Priorité: **05.05.1995 FR 9505505**

(43) Date de publication de la demande:
**06.11.1996 Bulletin 1996/45**

(73) Titulaire: **SIEMENS AUTOMOTIVE S.A.**
**31036 Toulouse Cédex (FR)**

(72) Inventeur: **Kunert, Martin**
**93102 Geisling (DE)**

(74) Mandataire: **Zedlitz, Peter, Dipl.-Ing. et al**
**Patentanwalt,**
**Postfach 22 13 17**
**80503 München (DE)**

(56) Documents cités:
DE-A- 4 040 572      GB-A- 2 283 631
US-A- 4 118 701      US-A- 5 274 380

**Description**

La présente invention est relative à un procédé de mesure de la distance et de la vitesse relatives d'un objet par rapport à un radar à ondes continues modulées en fréquence de manière périodique, et plus particulièrement à un tel procédé permettant une amélioration de la précision des mesures effectuées.

L'utilisation d'un radar à ondes continues modulées en fréquence de manière périodique, plus communément connu sous sa dénomination anglo-saxonne de radar FMCW, pour la mesure de la distance et de la vitesse relatives d'un objet est bien connue, par exemple du livre "Introduction to RADAR systems" de M.I. SKOLNIK, édité en 1962 chez McGraw-Hill (voir pp. 86 et suivantes). On connaît de la demande de brevet allemand DE 40 40 572, l'emploi d'un tel radar pour la mesure des distances et vitesses de véhicules automobiles. Selon le procédé employé dans la technique antérieure, on module une fréquence porteuse par un signal triangulaire par exemple, on émet en continu ce signal modulé et on mixe une fraction de ce signal avec le signal réfléchi par l'objet dont la distance et la vitesse sont à mesurer. On obtient ainsi deux fréquences de battement correspondant respectivement à l'alternance montante et à l'alternance descendante du signal de modulation du signal émis. A l'issue de chaque période de modulation, on tire la distance de la moyenne et la vitesse de la différence des fréquences de battement. Cependant, pour obtenir des mesures dont la précision est compatible avec une utilisation dans le domaine automobile, où distances et vitesses varient rapidement, on est amené, comme dans la technique citée, à employer des fréquences de modulation très élevées, pour obtenir des durées de rampes très courtes, de l'ordre d'une milliseconde, pour éviter les erreurs dues aux variations de vitesse et de distance pendant la mesure. Ceci entraîne l'emploi de matériels performants et chers pour permettre le traitement des signaux.

La présente invention a donc pour but de proposer un procédé de mesure qui permette à matériel équivalent, d'augmenter la précision ou à précision équivalente, d'employer un matériel plus économique.

On atteint ces buts de l'invention, ainsi que d'autres qui apparaîtront dans la suite de la présente description au moyen d'un procédé de mesure de la distance et de la vitesse relatives d'un objet par rapport à un radar à ondes continues modulées en fréquence de manière périodique, selon lequel on extrait la distance et la vitesse par la combinaison des fréquences de battement tirées du mélange des signaux émis et réfléchis, obtenues respectivement lors des alternances montantes et descendantes de la période de modulation. Selon l'invention, on calcule la distance et la vitesse de l'objet à chaque demi période de la modulation à partir des fréquences de battement respectives des deux alternances immédiatement précédentes.

Selon une caractéristique avantageuse du procédé, les valeurs de la distance, respectivement de la vitesse, obtenues lors des demi périodes paires et impaires sont utilisées pour déterminer chacunes deux enveloppes encadrant les valeurs réelles de la distance, respectivement de la vitesse. En outre, on déduit du croisement de ces deux enveloppes un changement du sens de variation de la distance ou de la vitesse.

Suivant une autre caractéristique importante de la présente invention, la distance et la vitesse de l'objet, calculées à chaque demi période sont pondérées par celles calculées à la demi période précédente.

D'autres caractéristiques et avantages du procédé suivant l'invention apparaîtront à la lecture de la description qui va suivre et à l'examen des dessins annexés dans lesquels:

- la figure 1 représente un graphe temporel des signaux émis et reçus par le radar, ainsi que les mesures qui en sont tirées,
- la figure 2 représente un schéma utile à la compréhension d'une caractéristique avantageuse de ce procédé,
- la figure 3 représente un exemple des mesures réalisées selon ce procédé.

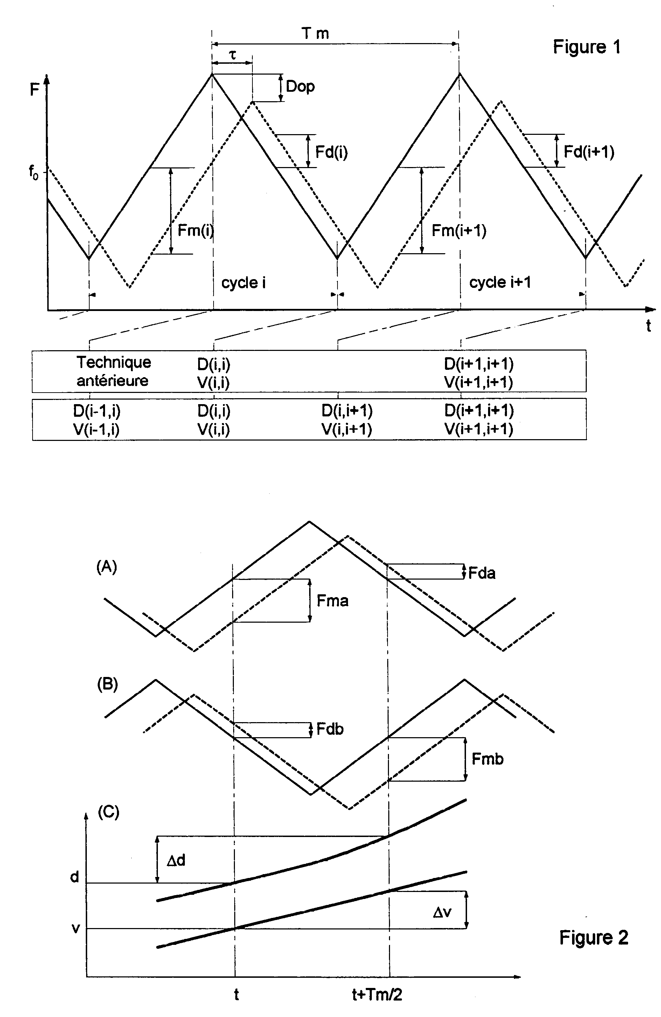

On se réfère maintenant à la figure 1 où on a représenté en trait plein deux cycles de modulation (i et i+1) du signal émis par le radar, et en trait interrompu le signal réfléchi par un objet. On constate que ces signaux sont décalés l'un par rapport à l'autre, tant selon l'axe des temps en abscisses, ce décalage τ représentant le temps de propagation des ondes, c'est à dire une fonction de la distance de l'objet au radar, que selon l'axe des fréquences en ordonnées, ce décalage Dop étant représentatif de la vitesse relative de l'objet par rapport au radar, du à l'effet Doppler. Les fréquences de battement obtenues par le mélange de ces deux signaux ont été repérées respectivement Fm(i) pour la fréquence correspondant à l'alternance montante et Fd(i) pour la fréquence correspondant à l'alternance descendante du cycle i, et Fm(i+1) et Fd(i+1) pour le cycle i+1. Classiquement, dans la technique antérieure, on extrait à l'issue du cycle i (resp. i+1) la distance et la vitesse relatives de l'objet en combinant les fréquences de battement. On a noté D(i,i) et V(i,i) la distance et la vitesse obtenues à partir des fréquences de battement Fm(i) et Fd(i) suivant les équations:

$$D(i,i) = \frac{Tm \cdot c}{8 \cdot \Delta F}(Fm(i) + Fd(i)) \quad (1) \qquad V(i,i) = \frac{c}{4 \cdot f_0}(Fd(i) - Fm(i)) \quad (2)$$

où c est la vitesse de la lumière, Tm la période du signal de modulation, ΔF l'excursion en fréquence du radar et $f_0$ la fréquence centrale du radar.

Quoique ces valeurs aient été obtenues à l'issue du cycle i, elles correspondent aux valeurs réelles moyennes pendant le cycle soit, en considérant une évolution linéaire des valeurs pendant la durée du cycle, aux valeurs réelles à l'instant $t_i$, point milieu du cycle.

Selon l'invention, on calcule également des valeurs intermédiaires D(i,i+1) et V(i,i+1) à partir de la fréquence Fd(i) correspondant à l'alternance descendante du cycle i et de la fréquence Fm(i+1) correspondant à l'alternance montante du cycle i+1. On constate que l'on obtient ainsi une information distance et vitesse par demi période, soit, pour un même radar, deux fois plus d'informations que dans la technique antérieure, ce qui permet un suivi plus précis de l'évolution de ces variables.

On va maintenant décrire en relation avec la figure 2, une caractéristique importante de l'invention. Les mesures de distance et de vitesse obtenues précédemment ne sont que des approximations des variables réelles. En effet, outre le retard pur lié au fait qu'il est nécessaire d'attendre d'avoir mesuré les deux fréquences de battement et exécuté les calculs, retard dont on peut tenir compte par un décalage d'une demi période, comme on l'a représenté sur le dessin de la figure 1, une erreur supplémentaire est commise lorsque distance et vitesse varient pendant la durée de la mesure, erreur d'autant plus importante que cette variation est grande, et dont le signe varie en fonction du sens de variation des variables mesurées. Pour mettre en évidence cette caractéristique, on a représenté en fonction du temps en (A) et (B) les signaux émis et reçus par deux radars A et B identiques, dont la modulation est en opposition de phase et en (C) les courbes représentatives de l'évolution de la distance et de la vitesse d'un objet. On tire des équations (1) et (2) précédentes une expression des fréquences de battement en fonction de la distance et de la vitesse:

$$Fm = K1 \cdot D - K2 \cdot V \qquad\qquad (3)$$

$$Fd = K1 \cdot D + K2 \cdot V \qquad\qquad (4)$$

où K1 et K2 sont les coefficients obtenus lors de la résolution du système d'équations (1) et (2) et dont on a omis volontairement le développement complet pour alléger la description.

A l'instant t, les valeurs de distance et de vitesse sont respectivement d et v, les fréquences de battement sont respectivement Fma pour le radar A et Fdb pour le radar B. A l'instant $t + \frac{Tm}{2}$, une demi période plus tard, les valeurs de distance et de vitesse deviennent d+Δd et v+Δv et les fréquences de battement correspondantes sont Fda et Fmb pour les radars A et B respectivement. En exprimant ces fréquences de battement en fonction des distances et vitesses correspondantes par les équations (3) et (4), puis en calculant par les équations (1) et (2) les valeurs de distance Da et Db et de vitesse Va et Vb données respectivement par les radars A et B, on peut constater que les deux radars ne donnent pas le même résultat:

Pour le radar A:

$$Da = d + \frac{1}{2}\,\Delta d - k\,\Delta v \qquad Va = v + \frac{1}{2}\,\Delta v - \frac{1}{k}\,\Delta d$$

Pour le radar B:

$$Db = d + \frac{1}{2}\,\Delta d + k\,\Delta v \qquad Vb = v + \frac{1}{2}\Delta v + \frac{1}{k}\,\Delta d$$

où ici encore le coefficient k est le résultat d'un calcul qui n'a pas été développé pour des raisons de simplification.

On remarque en effet que la distance obtenue correspond sensiblement à la distance moyenne, entachée d'une erreur de valeur absolue |k Δv| et de signe opposé entre les deux radars. La même remarque est applicable à la mesure de la vitesse. On a donc ainsi déterminé que pour une même valeur de distance ou de vitesse moyenne pendant un cycle de mesure, les valeurs obtenues à partir de séquences en opposition de phase permettent de définir un encadrement de cette valeur. Il apparaît donc qu'en employant le procédé selon l'invention et donc en calculant la distance et la vitesse relative de l'objet par rapport au radar à chaque demi période, on obtient alternativement des valeurs sur- ou sous-estimées par rapport aux valeurs réelles, en fonction du sens de variation de celles-ci, comme le montre le tableau suivant, dans lequel on a arbitrairement appelé demi période "paire" la demi période à l'issue de laquelle on calcule un résultat à partir d'une alternance montante puis descendante du signal de modulation et réciproquement demi période "impaire" la demi période à l'issue de laquelle on calcule un résultat à partir d'une alternance descendante puis montante.

| Sens de variation de la distance | Sens de variation de la vitesse | Demi période paire | | Demi période impaire | |
|---|---|---|---|---|---|
| D croissante | V croissante | D<D réel | V<V réel | D>D réel | V>V réel |
| D croissante | V décroissante | D>D réel | V>V réel | D<D réel | V<V réel |
| D décroissante | V croissante | D<D réel | V>V réel | D>D réel | V<V réel |
| D décroissante | V décroissante | D>D réel | V<V réel | D<D réel | V>V réel |

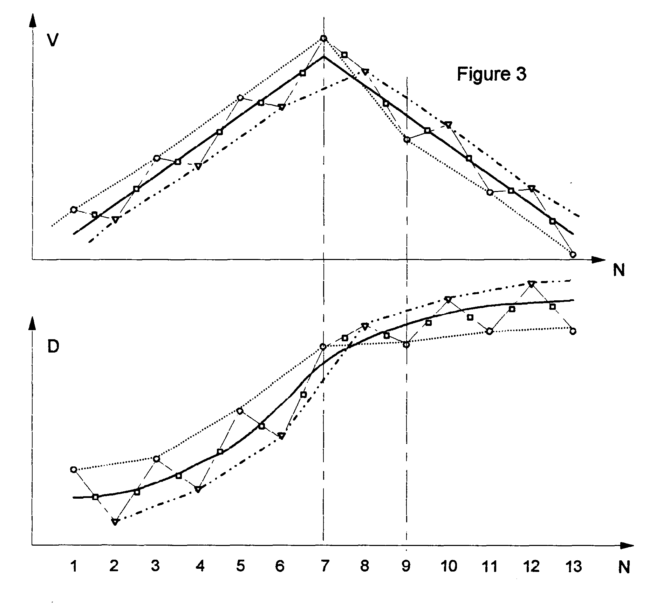

On utilise avantageusement cette caractéristique pour déterminer, selon le procédé suivant l'invention, deux courbes enveloppe obtenues en reliant les mesures effectuées lors des demi périodes paires et impaires respectivement. On peut le constater sur l'exemple illustré à la figure 3 où on a représenté en fonction des demi périodes N, les différentes courbes de la vitesse V et de la distance D respectivement. On a tracé en trait plein la courbe réelle, en trait pointillé la courbe enveloppe obtenue en reliant les mesures effectuées lors des demi périodes impaires et en trait mixte celle relative aux demi périodes paires. Il est utile de noter que cette dernière enveloppe correspondrait à la mesure effectuée par les procédés connus de la technique antérieure, en employant le même matériel. On remarque que lors d'un changement du sens de variation de la vitesse, comme montré ici à la demi période 7 par exemple, les deux courbes enveloppe se croisent, tant pour la vitesse que pour la distance, ceci correspondant au cas des deux premières lignes du tableau. Selon la technique antérieure, ce changement du sens de variation ne serait détectable qu'à la demi période 10, lors du calcul d'une vitesse inférieure à la vitesse calculée à la demi période paire précédente (demi période 8). Au contraire, au moyen du procédé selon l'invention, ce changement est détecté dès la demi période 9 où le calcul de la vitesse met en évidence un croisement des enveloppes.

On peut en outre constater que, selon une autre caractéristique avantageuse, en pondérant chaque mesure par la mesure effectuée à la demi période précédente, par exemple en faisant la moyenne de ces deux mesures, on améliore grandement la précision de la mesure. En effet, comme on l'a montré sur la figure 3 par les symboles en forme de carré situés sur la ligne en zigzag reliant les mesures successives, la moyenne obtenue entre deux mesures successives permet d'éliminer quasi complètement ces erreurs de signe opposé et permet d'obtenir une courbe très proche de la courbe réelle, par opposition avec l'enveloppe reliant les mesures des demi périodes paires, qui correspond comme vu précédemment, aux mesures réalisables avec le même matériel selon la technique antérieure.

On a ainsi montré que le procédé selon l'invention permet d'obtenir une meilleure précision en utilisant un matériel moins onéreux que celui nécessité par les procédés connus, car utilisant des fréquences de modulation plus faibles du signal émis par le radar. A titre d'exemple, des modulations d'une période de 30 millisecondes permettent avec ce procédé d'obtenir des mesures compatibles avec les exigences de la surveillance de trafic routier.

Bien entendu, quoique la description du procédé ait été faite en employant des radars FMCW dont la modulation en fréquence est de forme triangulaire, l'invention peut être étendue à toute forme de modulation périodique comme une modulation sinusoïdale ou en trapèze.

Liste des références utilisées

Fm(i)  fréquence de battement relevée lors de l'alternance montante du cycle i
Fd(i)  fréquence de battement relevée lors de l'alternance descendante du cycle i
D(i,i)  distance calculée à partir des fréquences de battement relevées lors des l'alternances montante et descendante du cycle i
V(i,i+1)  vitesse calculée à partir de la fréquence de battement relevée lors de l'alternance descendante du cycle i et de la fréquence de battement relevée lors de l'alternance montante du cycle i+1
$f_0$  fréquence centrale du radar
Tm  période de modulation
τ  décalage temporel
Dop  décalage en fréquence (Doppler)

**Revendications**

**1.**  Procédé de mesure de la distance et de la vitesse relatives d'un objet par rapport à un radar à ondes continues modulées en fréquence de manière périodique, selon lequel on extrait la distance et la vitesse par la combinaison des fréquences de battement (Fm(i); Fd(i)) tirées du mélange des signaux émis et réfléchis, obtenues respectivement lors des alternances montantes et descendantes de la période de modulation, caractérisé en ce que l'on calcule la distance (D(i,i); D(i,i+1)) et la vitesse (V(i,i); V(i,i+1)) de l'objet à chaque demi période de la modulation (i,i+1) à partir des fréquences de battement respectives (Fm(i),Fd(i); Fd(i),Fm(i+1)) des deux alternances immédiatement précédentes.

2. Procédé selon la revendication 1, caractérisé en ce que les valeurs de la distance, respectivement de la vitesse, obtenues lors des demi périodes paires et impaires sont utilisées pour déterminer chacunes deux enveloppes encadrant les valeurs réelles de la distance, respectivement de la vitesse.

3. Procédé selon la revendication 2 caractérisé en ce que l'on déduit du croisement de ces deux enveloppes un changement du sens de variation de la distance ou de la vitesse.

4. Procédé selon la revendication 1, caractérisé en ce que la distance et la vitesse de l'objet calculées à chaque demi période sont pondérées par celles calculées à la demi période précédente.

5. Procédé selon la revendication 4, caractérisé en ce que les valeurs réelles de la distance et de la vitesse sont estimées par la moyenne des deux mesures immédiatement précédentes.

## Patentansprüche

1. Verfahren zum Messen der relativen Entfernung und der relativen Geschwindigkeit eines Gegenstandes bezüglich eines periodisch frequenzmodulierten Dauer-Radars, bei dem man die Entfernung und die Geschwindigkeit durch eine Kombination der aus dem Gemisch der abgestrahlten und reflektierten Signale resultierenden Überlagerungsfrequenzen (Fm(i); Fd(i)) ermittelt, welche während der steigenden und fallenden Flanken der Modulationsperiode erhalten werden, dadurch gekennzeichnet, daß man die Entfernung (D(i,i); D(i,i+1)) und die Geschwindigkeit (V(i,i); V(i,i+1)) des Gegenstandes zu jeder Halbperiode der Modulation (i, i+1) aus den entsprechenden Überlagerungsfrequenzen (Fm(i), Fd(i); Fd(i), Fm(i+1)) der beiden unmittelbar vorhergehenden Flanken errechnet.

2. Verfahren nach Anspruch 1, dadurch gekennzeichnet, daß die Werte der Entfernung bzw. der Geschwindigkeit, die man während der geraden und ungeraden Halbperioden erhält, dazu verwendet werden, jede von zwei die Ist-Werte der Entfernung bzw. der Geschwindigkeit einschließenden Umhüllungen zu bestimmen.

3. Verfahren nach Anspruch 2, dadurch gekennzeichnet, daß man von der Schnittstelle der beiden Umhüllenden eine Richtungsänderung im Verlauf der Entfernung oder der Geschwindigkeit ableitet.

4. Verfahren nach Anspruch 1, dadurch gekennzeichnet, daß die Entfernung und die Geschwindigkeit des Gegenstandes, die zu jeder Halbperiode berechnet wurden, durch die bei der vorhergehenden Halbperiode berechneten gewichtet werden.

5. Verfahren nach Anspruch 4, dadurch gekennzeichnet, daß die Ist-Werte der Entfernung und der Geschwindigkeit durch den Mittelwert der unmittelbar vorhergehenden Messungen geschätzt werden.

## Claims

1. Method of measuring the relative distance and speed of an object with respect to a frequency modulated continuous wave radar, according to which the distance and speed are obtained by combining the beat frequencies (Fm(i); Fd(i)) produced by mixing the transmitted and reflected signals and obtained at the positive-going and negative-going alternations respectively of the modulation period, characterised in that the distance (D(i,i); D(i,i+1)) and the speed (V(i,i); V(i,i+1)) of the object are calculated at each modulation half-cycle (i,i+1) from the respective beat frequencies (Fm(i), Fd(i); Fd(i), Fm(i+1)) of the two immediately preceding alternations.

2. Method in accordance with claim 1, characterised in that the distance and speed values obtained at the even and odd half-cycles respectively are each used to determine two envelopes enclosing the real values of the distance and speed respectively.

3. Method in accordance with claim 2, characterised in that a change in the direction of variation of the distance or speed is deduced from the intersection of these two envelopes.

4. Method in accordance with claim 1, characterised in that the distance and speed of the object calculated at each half-cycle are weighted by those calculated at the previous half-cycle.

5. Method in accordance with claim 4, characterised in that the actual distance and speed values are estimated by averaging the two immediately preceding measurements.

Figure 1

Figure 2

7

Figure 3